# EUROPÄISCHE PATENTSCHRIFT

(11) **EP 3 536 989 B1**
(45) Veröffentlichungstag und Bekanntmachung des Hinweises auf die Patenterteilung: **02.08.2023**
(21) Anmeldenummer: 18160088.3
(22) Anmeldetag: 06.03.2018
(51) Int. Cl.: F16B 25/00, E04F 13/00

(54) **FASSADENPLATTENSCHRAUBE UND BEFESTIGUNGSANORDNUNG HIERMIT**
FAÇADE PLATE SCREW AND FASTENING ARRANGEMENT USING THE SAME
VIS DE PLAQUE DE FAÇADE ET DISPOSITIF DE FIXATION CORRESPONDANT

(43) Veröffentlichungstag der Anmeldung: 11.09.2019
(73) Patentinhaber: SFS Group International AG, 9435 Heerbrugg (CH)
(72) Erfinder: ANDERSAG, Markus, 9000 St. Gallen (CH)

(56) Entgegenhaltungen:
- EP-A2- 1 182 367
- EP-A2- 1 582 684
- EP-A2- 2 574 703
- DE-A1- 4 239 333
- DE-A1-102010 040 024
- DE-U1- 9 417 276
- DE-U1-202008 018 555

## Beschreibung

Die vorliegende Erfindung befasst sich mit einer Fassadenplattenschraube mit verbesserten Montageeigenschaften sowie einer Fassadenbefestigungsanordnung mit einer solchen Fassadenplattenschraube.

### HINTERGRUND

Im Nachfolgenden sei mit Fassadenplattenschraube eine Schraube definiert, die spezifisch für die Befestigung von Platten bzw. plattenförmigen Bauteilen (Fassadenplatten) an einer metallischen Unterkonstruktion ausgelegt ist, wobei die Materialstärke der Unterkonstruktion am Befestigungspunkt nur wenige Millimeter beträgt. Die Anwendung sei dabei nicht auf vertikale Befestigungsanordnungen und Fassaden eingeschränkt. Der Begriff Platte, Fassadenplatte bzw. plattenförmiges Bauteil bezieht sich auf alle im Wesentlichen flächig ausgedehnten Verkleidungselemente, welche nicht notwendigerweise homogene Stärke aufweisen müssen. Solche Fassadenplatten können mit einer Vielzahl von Materialien hergestellt werden, e.g. aus Faserzement, Kunststoff, Metall, Holz bzw. in Sandwichbauweise aus solchen Materialien.

Eine grundsätzliche Forderung an die Fassadenplattenbefestigung ist, dass sie neben dem Eigengewicht der Fassadenplatte auch auf die Platte einwirkende äussere Kräfte in die Unterkonstruktion ableiten kann. Windsog und Winddruck wie auch durch Sonnenstrahlung verursachte Dehnungsspannungen müssen über die Befestigungspunkte abgeleitet werden. Ferner ist es wichtig, dass Schrauben zur Fassadenplattenbefestigung ein hohes Rückdrehmoment besitzen, weil eine sich lockernde Schraube zu Vibrationen, Klappergeräuschen bzw. dem Herabfallen von Fassadenplatten führen könnte.

### STAND DER TECHNIK

Es sind im Stand der Technik verschiedene Lösungen zur Fassadenplattenbefestigung bekannt. Bei unsichtbaren Konstruktionen sind die Befestigungspunkte bzw. -elemente allein auf der Rückseite angebracht und damit nach Montage für den Betrachter nicht sichtbar. Montage, Wartung und Reparatur sind allerdings aufwändig.

Bei sichtbaren Befestigungen können Nietverbindungen, insbesondere Blindnietverbindungen und Schraubverbindungen (auch in Kombination mit Klebehalterungen) eingesetzt werden Dabei sind in den meisten Fällen die Fassadenplattenelemente vorgebohrt, um den Aufwand auf der Baustelle gering zu halten und zum anderen um ein einheitliches Bild der Fassade zu gewährleisten. Diese Vorbohrungen sind vergleichsweise gross dimensioniert, um den Fassadenplattenelementen ein Ausweichen in der Verlegeebene bei thermischer Ausdehnung zu erlauben. Andererseits bieten solche Durchbohrungen der Fassadenplatte, die deutlich grösser als der Nenndurchmesser der verwendeten Schraube sind, der Schraube beim Setzvorgang praktisch keine Führung.

Bei Schraubverbindungen werden vielfach Selbstbohrschrauben eingesetzt, welche kein Vorbohren in der Unterkonstruktion erfordern. Allerdings haben diese Selbstbohrschrauben Nachteile. Zum einen werden sie häufig als Bimetall-Schrauben gefertigt mit einem Kopf und Schaft aus Edelstahl und einer angeschweissten Bohrspitze aus hartem C-Stahl, was die Herstellung verteuert. Zudem verlangt das Setzen von Selbstbohrschrauben ein sehr sauberes Verarbeiten, weil die Korrektur einer falsch gesetzten Schraube, z. B. durch schräges oder nicht zentrisches Einbohren, nur aufwändig korrigierbar ist.

Vor diesem Hintergrund erscheint es an sich nicht rationell, Vorbohrungen an der Unterkonstruktion vor Ort auf der Baustelle vorzunehmen, weil damit (Vor-)Bohrvorgang und Verschraubung zwei getrennte Arbeitsvorgänge werden. Bei teuren Fassadenmaterialien bzw. bei besonders hoher geforderter Verarbeitungsqualität und garantiert hoher Belastbarkeit jedes einzelnen Befestigungspunktes hat die Trennung jedoch auch Vorteile.

Zum Vorbohren der Unterkonstruktion kann eine Bohrlehre verwendet werden, die die vorgefertigten Durchbohrungen der Fassadenplatte als Führung verwendet. Dadurch werden die Löcher in der Unterkonstruktion exakt konzentrisch zur Fassadenplatte ausgerichtet und das Schraubenbild an der Fassade präziser. Ferner kann auf selbstbohrende BiMet Schrauben verzichtet werden, selbstfurchende Schrauben, bevorzugt Edelstahlschrauben genügen.

Dennoch kann eine Fassadenplattenschraube gemäss Stand der Technik für den geschilderten Einsatzfall nicht ohne Sorgfalt gesetzt werden. Um die Montage zu beschleunigen, haben Schrauben dieser Art häufig eine hohe Steigung. Da die Unterkonstruktion aus wenige Millimeter starkem Material, in der Regel Stahlblech oder Aluminium (Profile, Rohre) besteht, tendieren diese Schrauben dazu, sich beim Einfurchen, also beim Einformen des Gewindes in das vorgebohrte Loch, schräg zu stellen. Da, wie oben erwähnt, die vorgebohrten Löcher in der Fassadenplatte zur Kompensation der Wärmeausdehnung der montierten Platte deutlich grösser sind als der Nenndurchmesser der Schraube, muss der Schraubenkopf einer Fassadenplattenschraube mit noch grösserem Durchmesser ausgelegt werden, um die Haltefunktion zu gewährleisten. Der allseitige Überstand des Schraubenkopfes muss zudem so grosszügig sein, dass nicht bereits die kleinste Verschiebung der Fassadenplatte dazu führt, dass die Plattenvorbohrung neben dem Schraubenkopf sichtbar wird. Bei einem so grossen Kopf besteht also die Gefahr, dass bei schrägem Einschrauben der Rand des Schraubenkopfes an der Fassadenplattenoberfläche anschlägt und die Verkippung der Schraube dauerhaft sichtbar bleibt. Ferner wird dadurch auf die Fassadenplatte eine Punktbelastung ausgeübt statt einer flächigen Anpressung, was wiederum Nachteile hat bei der Toleranz gegen thermischer Ausdehnung der Fassadenplatte.

Im Stand der Technik DE 94 17 276.5 wird eine selbstschneidende Schraube beschrieben mit einem doppelgängigen Gewinde, die als Universalschraube bei einer Vielzahl von Anwendungen hohe Leistungen erzielen kann. Dazu weist sie insbesondere einen Gewinde-Flankenwinkel von 45° +/-2.5° auf, ein spezifisches Schnitttiefenverhältnis und ein definiertes Gewindesteigungsverhältnis.

Die Schrift EP 1 182 367 A2 bezieht sich auf einen Schraubstift insbesondere zur Befestigung von Dach- oder Fassadenplatten. Er weist eine Senkkopfschraube mit an der Kopfunterseite angebrachten, schneidenartigen Vorsprüngen auf, die sich beim Setzen in die Fassadenplatten einsenken können. Ein gewindefreier Unterkopfabschnitt ist vorgesehen.

Die DE 42 39 333 A1 bezieht sich auf eine Fassadenplattenschraube, die eine auf dem Schraubenschaft angebrachte, unverlierbar gehaltene Unterlagscheibe aufweist.

In der EP 1 582 684 A2 wird eine Schraube zur Verankerung eines Fensterprofils an einer Unterkonstruktion gezeigt. Als Besonderheit weist sie einen an der Kopfunterseite angebrachten Einstich auf, der dazu dient, die Profilwandung des Kunststoffprofils aufzunehmen

Die Aufgabe der Erfindung besteht zusammengefasst darin, eine Fassadenplattenschraube bzw. eine Befestigungsanordnung für Fassadenplatten zu beschreiben, welche die Nachteile des Standes der Technik vermeidet und darüber hinaus wirtschaftlich herzustellen und zu verarbeiten ist.

### BESCHREIBUNG DER ERFINDUNG

Diese Aufgabe wird durch eine Befestigungsanordnung nach Anspruch 7 bzw. eine Fassadenplattenschraube gemäss Anspruch 1 gelöst. Die Unteransprüche beschreiben weitere Varianten und Ausführungsbeispiele.

Die Wirkung der Erfindung beruht auf einer spezifischen Auswahl und genauen Abstimmung geometrischer Dimensionen der Fassadenplattenschraube und der Befestigungsanordnung aufeinander. Das Prinzip sei im Folgenden erläutert anhand der schematischen, nicht massstäblichen Figuren 1 bis 6, wobei die Figuren 1 und 2 der Bezeichnung der geometrischen Grössen dienen. Um die Figuren nicht zu überfrachten, sind manche Bezeichnungen nur dort gezeigt, gleiche Bestandteile haben jedoch auch in den Figuren 3 bis 6 gleiche Bedeutung. Die Bauteile S0 bis S4 bezeichnen Schrauben mit identischem nominalem Aussendurchmesser Ds. Wenn nur das Bauteil S angesprochen wird, seien S0 bis S4 gleichermassen gemeint.

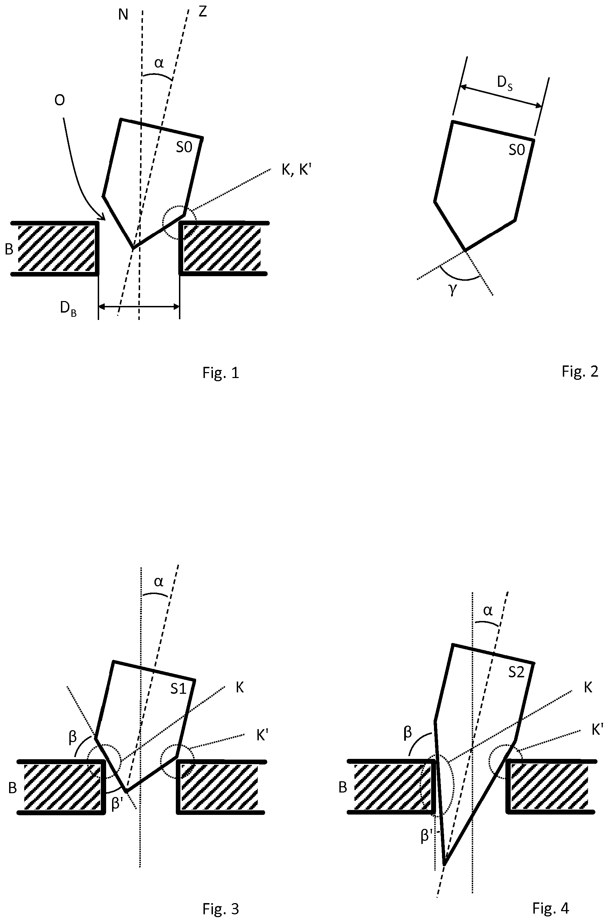

S1 bis S4 unterscheiden sich vorrangig durch ihre Spitzengeometrie, genauer durch den Konuswinkel γ der Spitze. Mit Konus seien dabei sowohl eine kegelförmige wie auch eine kegelstumpfförmige Spitze gemeint. Die Ausführungen für den Konuswinkel γ der Spitze gelten analog. Z bezeichnet die Rotations- bzw. zentrale Längsachse jeder Schraube S. B bezeichnet eine Unterkonstruktion bzw. Unterlage, welche eine vorgebohrte Öffnung O mit dem Durchmesser D_{B} aufweist; D_{B} sei für alle betrachteten Fälle von Figur 1 und 3 bis 6 identisch. Mit B ist ein bevorzugt metallisches Bauteil, beispielsweise ein Blech oder Profil mit wenigen Millimetern Stärke gemeint. K bzw. K' bezeichnen Kontaktpunkte, an dem eine Schraube S beim Eindrehen kraftschlüssig mit B in Kontakt tritt.

In den Figuren 1 bis 6 ist die Achse Z generell um einen Winkel α gegen die Senkrechte N auf B geneigt (Figur 1), die Schraube S wird also verkippt auf bzw. in der vorgesehenen Durchbohrung O angesetzt. Würde die Schraube perfekt senkrecht angeordnet (α=0°), entstünde eine vollständige Berührlinie zwischen dem Umfang der Durchbohrung O und einem Kreis auf dem Konus der Schraubenspitze. Beim schrägen Ansetzen wird jedoch die Schraube an zwei Punkten bzw. auf Kreisbogensegmenten K und K' am Umfang der Bohrung O anliegen. Diese Kreisbogenabschnitte werden umso kürzer, je grösser die Verkippung ist.

Wichtig ist bei den Überlegungen für eine optimierte Fassadenplattenschraube die Grösse des Winkels γ der Schraubenspitze. Figur 3 bis 6 zeigen ferner je zwei Winkel β und β'. β steht für den Winkel zwischen der Ebene des Bauteils B und der benachbarten Konusflanke der Schraubenspitze; β ' bezeichnet den Winkel zwischen der Zylinderwand der Vorbohrung O und derselben Konusflanke. Figur 3 zeigt S1 mit einem stumpfen Spitzenkonus mit γ≈ 90°. Erfahrungsgemäss ist das Einschraubverhalten bzw. Einfurchen hier nicht optimal. Das verhalten wird verständlich, weil bei dem gewählten Winkel α und dem stumpfen Konus (γ => 90°) β und β' ungefähr gleich gross ausfallen. Dies bewirkt, dass keiner der Flankenbereiche K oder K' sich bevorzugt in das Material von B einfurcht.

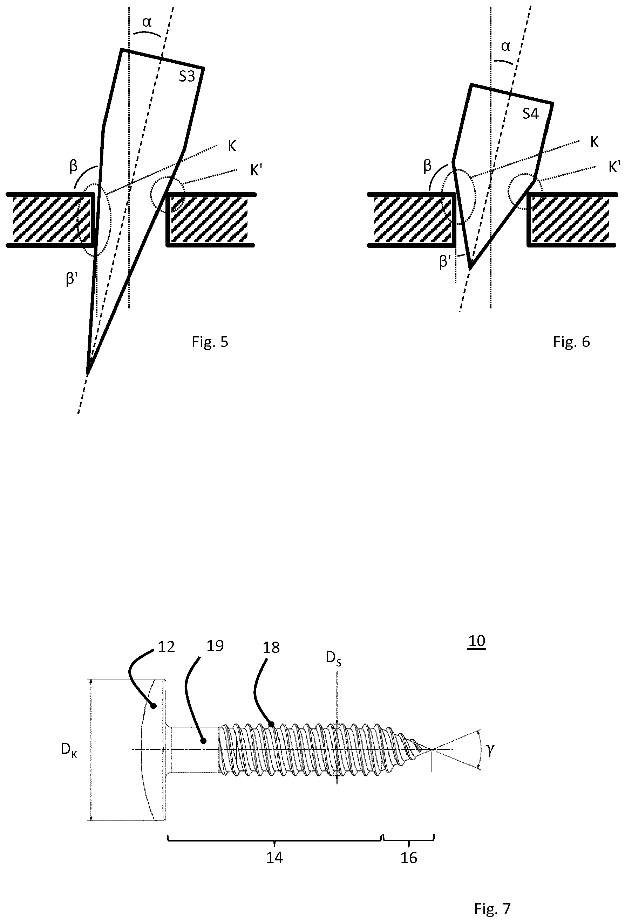

Bei einem spitzen Konus (γ < 40°) wie in Figur 4, erreicht β beinahe 90°, während β' gegen Null geht. Würde bei gleicher Winkelausrichtung der Schraube der Konus der Schraubenspitze noch enger (S3, γ < 30°, Figur 5) wird der Winkel β > 90° und der Winkel β' wird sogar negativ. Der Schraubenkonus schlägt bei der vorgegebenen Geometrie wie ersichtlich sogar beim Ausgang der Bohrung am Rand an.

Der spitze Konus von Figur 4 zeigt, dass der Kontaktbereich K und damit das auf dem Konus angeordnete Gewinde besser mit dem Material von B im Kontakt steht als der Konusbereich bei K'. Dies führt dazu, dass dort das Einfurchen in das Material der Vorbohrung O bevorzugt erfolgen wird. Daraus ergibt sich ein Aufstelleffekt für die Schraube S, mit anderen Worten der anfängliche Verkippungswinkel α wird beim Eindrehen kleiner.

Daraus könnte man die Lehre ziehen, eine Fassadenplattenschraube für diesen Anwendungsfall besonders spitz auszulegen. Die Geometrie von Figur 5 zeigt jedoch, dass die beschriebenen Vorteile nicht für beliebig spitze Winkel γ gelten. In Figur 4 wird ein Aufrichten der Schraube bei gleichzeitigem Einsenken in die Vorbohrung bewirken, dass der Winkel β' zunehmen kann. Die Aufrichtebewegung der Schraube wird erst durch das zunehmende Einfurchen des Gewindes in die Bohröffnung O gestoppt, wobei die Kontaktfläche K in Figur 4 vorübergehend abnehmen kann. Bei Figur 5 dagegen ist β' negativ und die Kontaktfläche K wird beim Aufrichten (α nimmt ab) zunächst grösser und damit der Grad der Einformung.

Eine Auslegung mit sehr spitzem Konuswinkel γ wird also tendenziell weniger Selbstkorrektur und damit ein Aufrichten der Schraube S3 erlauben als eine gemässigte Ausrichtung wie S4 oder S2. Dazu kommt, dass sehr spitze Konuswinkel γ bei Schrauben schwieriger herzustellen sind, an der Spitze zum Verbiegen neigen und auch die Verletzungsgefahr bei der Handhabung höher ist. Zudem erfordert die Spitze einen gewissen Freiraum hinter dem Bauteil B, was problematisch sein kann.

Weiterhin wurde erkannt, dass es besondere Vorzüge hat, das Gewinde zweigängig auszulegen. Ein zweigängiges Gewinde bietet gegenüber einem eingängigen bei gleich hoher Steigung eine höhere Dichte an Gewindegraten. Es hatte sich gezeigt, dass beim Eindrehen der Schrauben S bei eingängigen Gewinden die Tendenz besteht, dass eine vorhandene Materialkante von B sich in einem Gewindegrund zentriert. Bei einer zweigängigen Schraube ist dieser Effekt wesentlich unwahrscheinlicher. Zudem verläuft der Furchvorgang besser, weil mehr furchende Gewindegrate pro Längeneinheit der Schraube vorhanden sind. Dies wiederum verbessert auch das Rückdrehmoment, welches durch die Kontaktfläche zwischen dem Material von B und den Gewindeflanken mitbestimmt wird.

Es ist deutlich, dass die oben gemachten Ausführungen bestimmte geometrische Verhältnisse der Fassadenplattenschraube wie der Befestigungsanordnung erfordern. Wie oben skizziert, müssen diese derart aufeinander abgestimmt werden, dass sie synergetisch die Qualität der Befestigung optimieren.

Zusammengefasst wird eine Fassadenplattenschraube 10 gemäss vorliegender Erfindung einen sehr gross durchmessenden Kopf 12 mit Durchmesser D_{K} aufweisen, an den sich ein im wesentlichen zylinderquerschnittförmiger, längsausgedehnten Schaft 14 anschliesst. Dessen Oberfläche ist zumindest teilweise mit einem Gewinde 18 versehen mit einem Nenndurchmesser D_{s.} Die konusförmige Spitze 16 weist einen Spitzenwinkel γ auf und das Gewinde 18 erstreckt sich vom Schaft 14 kontinuierlich bis auf die Spitze 16.

Kennzeichnend ist dabei, dass der Spitzenwinkel γ 45° +/-5° beträgt und das Gewinde zumindest zweigängig ausgeführt ist. Dadurch wird einerseits ein schnelles Eindrehen der Schraube ermöglicht, weil die Schraubensteigung hoch ist. Gleichzeitig wird dafür gesorgt, dass genügend Gewindeflanken pro Schraubenlänge zur Verfügung stehen, sodass die Schraube sicher ins umgebende Material eingreift bzw. einfurcht. Der Kopfdurchmesser D_{K} ist mindestens doppelt so gross ausgeführt ist wie der Nenndurchmesser Ds. Die Fassadenplattenschraube 10 benötigt keine Bohrspitze.

Mit der Kombination dieser Eigenschaften wird erreicht, dass beim Einformen bzw. Einfurchen der Schraube die Fähigkeit zur Korrektur des Verkippungswinkels α erhält.

Bevorzugt ist eine solche Fassadenplattenschraube 10 einstückig gefertigt ist. Dem Einsatz als Fassadenplattenschraube entsprechend wird als Material zur Herstellung Edelstahl bevorzugt, insbesondere hochfester Edelstahl. Die Schraube lässt sich in einem rationellen Kaltumformverfahren herstellen.

In einer Ausführungsform kann die Fassadenplattenschraube 10 eine dekorative, funktionelle bzw. korrosionshemmende Beschichtung erhalten. Insbesondere kann die Schraube farblich an die Fassadenplatte angepasst werden, so dass die Befestigungspunkte weniger auffallen. Als funktionelle Beschichtungen wären eine Verzinkung oder ein Überzug aus Wachs denkbar, was das Einformen in die Unterkonstruktion erleichtert. Ein Überzug mit anderen, zusätzlichen Korrosionsschutzmassnahmen, z.B. gegen Seewasser / Gischt, Kontaktkorrosion ist ebenfalls je nach Einsatzfall möglich. Auch eine Kombination dieser Massnahmen je nach Einsatzfall kann angebracht sein.

Die erfindungsgemässe Fassadenplattenschraube 10, 30 wird ferner einen gewindefreien Unterkopfabschnitt 19, 39 auf dem Schaft 14, 34 aufweisen. Dieser markiert den Bereich, in dem die Schraube im montierten Zustand in der Vorbohrung der Fassadenplatte liegt. Ein Gewinde ist dort nicht notwendig.

Ausserdem wird die Fassadenplattenschraube 30 einen Anschlagbund 39 aufweisen, der auf dem Schaft 34 zwischen dem Gewindeabschnitt und dem gewindefreien Unterkopfabschnitt 39 angeordnet wird. Dieser Bund 39 wirkt als Tiefenanschlag, der ein Überdrehen der Schraube erlauben kann und dadurch eine Rückdrehsicherheit gewährleistet. Ferner stellt er sicher, dass der Schraubenkopf eine definierte Distanz zur Auflageoberfläche der Unterkonstruktion erreicht. Der Abstand zwischen Anschlagbund und Unterkopffläche wird üblicherweise passend zur Dicke der Fassadenplatte gewählt.

In einer bevorzugten Realisierungsform wird eine Fassadenplattenschraube 10, 30 einen Nenndurchmesser von 4-7mm, bevorzugt 5-6mm (jeweils einschliesslich) aufweisen und eine Steigung von 2 bis 3mm (jeweils einschliesslich).

Eine Befestigungsanordnung 20 nach der Erfindung umfassend ein tragendes Bauteil 26 und eine Fassadenplatte 22 sowie eine Fassadenplattenschraube 10, 30 der oben beschriebenen Art. Das tragende Bauteil 26 wird als Teil einer Unterkonstruktion verstanden, die am Befestigungspunkt eine Materialstärke von 2 bis 6.5mm bei Aluminium bzw. 0.9 bis 2.5mm bei Stahl aufweist.

Die in der vorliegenden Erfindung angesprochenen Fassadenplatten 26 sind üblicherweise aus Kunststoff, Metall, Faserzement, Isolationsmaterialien oder aus einem Verbund einer oder mehrerer solcher Materialien. Sie weisen Vorbohrungen auf, deren Durchmesser D_{P} mindestens 50% grösser sind als der Nenndurchmesser D_{S} der Fassadenplattenschraube 10, 30. Diese Vorbohrungen in der Fassadenplatte wiederum können als Führungen beim Einbringen von Vorbohrungen im tragenden Bauteil 26 bzw. der Unterkonstruktion dienen. Dazu kann eine Bohrlehre verwendet werden, die ein zentriertes, senkrechtes Vorbohren in die Unterkonstruktion unterstützt. Damit wird gewährleistet, dass die Vorbohrungen in der Unterkonstruktion konzentrisch und fluchtend zu den Vorbohrungen in der Fassadenplatte sind. Der Durchmesser der Vorbohrung in der Unterkonstruktion bzw. Bauteil 26 ist bevorzugt höchstens 2 bis 2.5mm geringer als der Nenndurchmesser D_{S} einer Fassadenplattenschraube 10, 30.

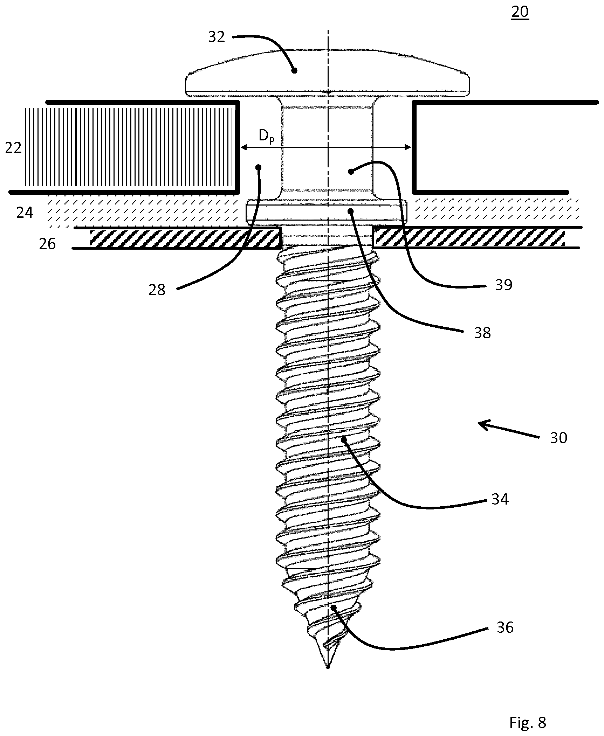

Die gegenüber der Schraubennenndurchmesser D_{S} grosse Vorbohrung D_{P} in der Fassadenplatte lässt nach korrekter Montage einen Gleitpunkt entstehen, also eine Befestigung mit Spiel nach allen Seiten. Soll statt des Gleitpunktes ein Festpunkt ohne ein solches Spiel gesetzt werden, kann ohne eine Änderung an den Bohrlehren oder Vorbohrungen vor dem Setzen der Schraube 10 eine Hülse über den Schaft geschoben werden, die so bemessen ist, dass der Freiraum 28 zwischen der Fassadenplatte 22 und dem gewindefreien Unterkopfabschnitt 19 aufgefüllt wird. Die Hülse hat also einen Aussendurchmesser geringfügig kleiner als D_{P} und einen Innendurchmesser geringfügig grösser als D_{S} und eine Höhe etwas geringer als die Dicke der Fassadenplatte 22. Da das Aufschieben für eine Auslegung wie in Figur 8 gezeigt nicht möglich wäre, böte sich hier an, den Bund 38 als Zylinder auszuführen, der mit einheitlichem Durchmesser bis zum Kopf 32 reicht.

In einer weiteren Variante einer Befestigungsanordnung 20 kann zwischen dem tragenden Bauteil 26 und der Fassadenplatte 22 eine dämpfende, isolierende, reibungsmindernde und/oder klebende Zwischenschicht angebracht werden. Insbesondere kann die Zwischenschicht 24 ein Schaumstoffband, ein Klebeband, ein Dämmfilz bzw. eine Kunststofflage sein.

### KURZBEZEICHNUNG DER FIGUREN

Figur 1 zeigt einen Querschnitt durch ein schematische Einschraubsituation zur Erläuterung von Kenngrössen.
Figur 2 zeigt schematisch eine Schraube S mit Kenngrössen.
Figuren 3 bis 6 zeigen Einschraubsituationen von Schrauben mit unterschiedlich ausgeführten konusförmigen Spitzen.
Figur 7 zeigt eine Ausführungsform einer nicht erfindungsgemässen Fassadenplattenschraube.
Figur 8 zeigt eine weitere Ausführungsform einer erfindungsgemässen Fassadenplattenschraube im verbauten Zustand in Seitenansicht / Teilquerschnitt.

### BESCHREIBUNG DER FIGUREN

Nachdem im Abschnitt "Beschreibung der Erfindung" bereits ausführlich auf die Zeichnungen 1-6 eingegangen wurde, seien hier nur die Kernbestandteile kurz erläutert.

Die Figuren 1 und 2 bezeichnen verschiedene Kenngrössen einer Befestigungsanordnung bzw. einer Fassadenplattenschraube. Mit S0 ist eine schematisierte, stark verkürzte Schraube gezeigt mit Durchmesser D_{S}. Die Einbausituation in ein Bauteil B zeigt, dass die Schraube S0 um einen Winkel α gegenüber dem Lot N auf das Bauteil B verkippt ist. B hat eine vorgebohrtes Loch / Durchgangsöffnung O mit Durchmesser D_{B}. K bzw. in späteren Figuren auch K' bezeichnen den Kontaktpunkt bzw. die Kontaktfläche oder Kontaktlinie zwischen der Schraube S und der Kante der Öffnung O im Bauteil B.

In Figur 2 ist zusätzlich der Spitzenwinkel γ der Schraube S0 markiert. Da die Erfindung eine Schraube ohne Bohrspitze beschreibt, ist die Spitze mit geraden Flanken gemäss Stand der Technik ausgeführt.

Die Figuren 4 bis 6 zeigen, wegen der Vergleichbarkeit schematisiert, Einschraubszenarien mit Schrauben S1 bis S4. Diese unterscheiden sich durch ihre Spitzengeometrie, wobei der Konuswinkel γ der Spitze von S1 nach S3 abnimmt. Der Kippwinkel α ist jeweils derselbe. Die Auswirkung der verschiedenen Berührungspunkte bzw. -flächen wurde oben erläutert.

In Figur 7 ist eine Ausführungsform einer nicht erfindungsgemässen Fassadenplattenschraube 10 gezeigt. Sie umfasst einen Kopf 12, dessen Durchmesser ein Mehrfaches des Schraubennenndurchmessers D_{S} beträgt. Anschliessend an den Kopf befindet sich der Schaft 14, gefolgt von der konusförmigen Spitze 16. Der Schaft trägt ein Gewinde 18, erfindungsgemäss mindestens zweigängig, welches vom Schaft kontinuierlich auf den Konus bzw. die Spitze 16 übergeht. Unterkopfabschnitt 19 als Teil des Schaftes 14 ist gewindefrei ausgeführt.

Figur 8 zeigt eine Ausführungsform 30 einer erfindungsgemässen Fassadenplattenschraube. Sie weist bis auf den Anschlagbund 38 dieselben Funktionsgruppen auf. Der Kopf ist mit 32 bezeichnet, gefolgt von Schaft 34 und Spitze 36. Der Schaft trägt den Anschlagbund 38 zwischen dem Gewinde(abschnitt) und dem gewindefreien Unterkopfabschnitt 39. Die erfindungsgemässe Fassadenplattenschraube 30 ist verbaut in einer Befestigungsanordnung 20 gezeigt. Diese umfasst neben der Schraube 30 eine Fassadenplatte 22 und ein tragendes Bauteil 26. Letzteres ist oder ist Teil der Unterkonstruktion. Ferner ist eine Zwischenschicht 24 eingezeichnet, die als ein elastisches, dämpfendes Schaumstoffband ausgeführt sein kann. Zwischen der Fassadenplatte 22 und dem gewindefreien Unterkopfabschnitt 39 ist ein Freiraum vorgesehen, der der montierten Fassadenplatte 22 seitliches Spiel erlaubt, um unterschiedliche Ausdehnungen von der Unterkonstruktion 26 und der Fassadenplatte 22 auszugleichen und so einen Verzug der Fassade zu vermeiden.

Eine nicht-explizite Darstellung oder Beschreibung einer Kombination von Merkmalen bedeutet nicht, dass eine solche Kombination ausgeschlossen ist.

### BEZUGSZEICHENLISTE

- S, S0, S1.... S4: Schraube, Fassadenplattenschraube
- Z: Rotations- bzw. zentrale Längsachse
- B: Unterkonstruktion, Unterlage, Blech, metallisches Bauteil, Profil
- O: Öffnung in B
- N: Senkrechte, Lot auf B
- D_{B}: Durchmesser von O in B
- D_{S}: Durchmesser von S, S0...S4
- D_{K}: Kopfdurchmesser
- D_{P}: Durchmesser der Vorbohrungen in Fassadenplatte 22
- K , K': Kontaktpunkt(e)
- α: Kippwinkel der Achse Z bezogen auf N
- β: Winkel zwischen der Ebene von B und Konusflanke von S
- β ': Winkel zwischen der Zylinderwand von O und Konusflanke von S
- γ: Konuswinkel der Spitze von S, S0...S4

- 10, 30: Fassadenplattenschraube
- 12, 32: Kopf
- 14, 34: Schaft
- 16, 36: (konusförmige) Spitze der Schraube 10
- 18: Gewinde, Gewindeabschnitt
- 19, 39: gewindefreier Unterkopfabschnitt
- 38: Bund, Anschlagbund

- 20: Befestigungsanordnung
- 22: Fassadenplatte
- 24: Zwischenschicht
- 26: tragendes Bauteil, Unterkonstruktion, Profil
- 28: Spielraum

## Patentansprüche

1. Fassadenplattenschraube (10)
- umfassend einen Kopf (12) mit Durchmesser D_{K},
- und einen im wesentlichen zylinderquerschnittförmigen, längsausgedehnten Schaft (14) mit einem Nenndurchmesser D_{S},
- wobei die Oberfläche des Schafts zumindest teilweise mit einem zumindest zweigängig ausgeführt Gewinde (18) versehen ist;
- und einer konusförmigen Spitze (16) mit einem Spitzenwinkel γ, wobei das Gewinde (18) sich vom Schaft (14) kontinuierlich bis auf die Spitze (16) erstreckt,
- und keine Bohrspitze aufweist
wobei
- der Spitzenwinkel γ 45° +/-5° beträgt,
- der Kopfdurchmesser D_{K} mindestens doppelt so gross ausgeführt ist wie der Nenndurchmesser Ds; und die Fassadenplattenschraube ferner
- einen gewindefreien Unterkopfabschnitt (19, 39) auf dem Schaft (14, 34) und
- einen Anschlagbund (38) aufweist, angeordnet auf dem Schaft (34) zwischen dem Gewinde und dem gewindefreien Unterkopfabschnitt (39).

2. Fassadenplattenschraube (10) nach Anspruch 1, **dadurch gekennzeichnet, dass** die Fassadenplattenschraube einstückig gefertigt ist.

3. Fassadenplattenschraube (10) nach Anspruch 1 und/oder2, **dadurch gekennzeichnet, dass** die Fassadenplattenschraube aus Edelstahl gefertigt ist.

4. Fassadenplattenschraube (10) nach Anspruch 1 - 3, **dadurch gekennzeichnet, dass** die Fassadenplattenschraube eine dekorative, funktionelle bzw. korrosionshemmende Beschichtung aufweist.

5. Fassadenplattenschraube (10, 30) nach Anspruch 1 - 4, **dadurch gekennzeichnet, dass** die Fassadenplattenschraube einen Nenndurchmesser von 4-7mm, bevorzugt 5-6mm (jeweils einschliesslich) aufweist.

6. Fassadenplattenschraube (10, 30) nach Anspruch 1 - 4, **dadurch gekennzeichnet, dass** die Fassadenplattenschraube eine Steigung von 2 bis 3mm aufweist (jeweils einschliesslich)

7. Befestigungsanordnung (20) umfassend ein tragendes Bauteil (26) und eine Fassadenplatte (22) sowie eine Fassadenplattenschraube (10, 30) nach Anspruch 1 - 6.

8. Befestigungsanordnung (20) nach Anspruch 7, **dadurch gekennzeichnet, dass** das tragende Bauteil (26) Teil einer Unterkonstruktion ist und am Befestigungspunkt eine Materialstärke von 2 bis 6.5mm aus Aluminium bzw. 0.9 bis 2.5mm aus Stahl aufweist

9. Befestigungsanordnung (20) nach Anspruch 7 und/oder 8, **dadurch gekennzeichnet, dass** die Fassadenplatte (26) aus Kunststoff, Metall, Faserzement, Isolationsmaterialien oder aus einem Verbund einer oder mehrerer solcher Materialien besteht.

10. Befestigungsanordnung (20) nach Anspruch 7 - 9, **dadurch gekennzeichnet, dass** die Fassadenplatte (26) Vorbohrungen aufweist, deren Durchmesser D_{P} mindestens 50% grösser sind als der Nenndurchmesser Ds der Fassadenplattenschraube (10, 30).

11. Befestigungsanordnung (20) nach Anspruch 7 - 10, **dadurch gekennzeichnet, dass** im tragenden Bauteil (26) bzw. der Unterkonstruktion Vorbohrungen vorgesehen sind, konzentrisch und fluchtend zu den Vorbohrungen in der Fassadenplatte und dass deren Durchmesser maximal 2mm grösser ist als der Nenndurchmesser Ds der Fassadenplattenschraube (10, 30).

12. Befestigungsanordnung (20) nach Anspruch 7-11, **dadurch gekennzeichnet, dass** zwischen dem tragenden Bauteil (26) und der Fassadenplatte (22) eine dämpfende, isolierende, reibungsmindernde und/oder klebende Zwischenschicht (24) angebracht ist.

13. Befestigungsanordnung (20) nach Anspruch 12, **dadurch gekennzeichnet, dass** die Zwischenschicht (24) eine Schaumstoffband, ein Klebeband, ein Dämmfilz bzw. eine Kunststofflage ist.

## Claims

1. Façade panel screw (10)
- comprising a head (12) with diameter D_{K},
- and a substantially cylindrical cross-sectional, longitudinally expanded shank (14) having a nominal diameter D_{S},
- wherein the surface of the shank is at least partially provided with an at least two-start thread (18);
- and a cone-shaped tip (16) having a tip angle γ, wherein the thread (18) extends continuously from the shank (14) to the tip (16),
- and has no drill point,
wherein
- the tip angle γ is 45° +/-5°,
- the head diameter D_{K} is designed at least twice as large as the nominal diameter D_{S}; and the façade panel screw further comprises
- a threadless underhead portion (19, 39) on the shank (14, 34), and
- a stop collar (38) arranged on the shank (34) between the thread and the threadless underhead portion (39).

2. Façade panel screw (10) according to claim 1, **characterized in that** the façade panel screw is manufactured in one piece.

3. Façade panel screw (10) according to claim 1 and/or 2, **characterized in that** the façade panel screw is made of stainless steel.

4. Façade panel screw (10) according to claim 1-3, **characterized in that** the façade panel screw has a decorative, functional or corrosion-inhibiting coating.

5. Façade panel screw (10, 30) according to claim 1-4, **characterized in that** the façade panel screw has a nominal diameter of 4-7 mm, preferably 5-6 mm (inclusive in each case).

6. Façade panel screw (10, 30) according to claim 1-4, **characterized in that** the façade panel screw has a pitch of 2 to 3 mm (inclusive in each case).

7. Fastening arrangement (20) comprising a supporting component (26) and a façade panel (22) and a façade panel screw (10, 30) according to claim 1-6.

8. Fastening arrangement (20) according to claim 7, **characterized in that** the supporting component (26) is part of a substructure and has a material thickness of 2 to 6.5 mm made of aluminum or 0.9 to 2.5 mm made of steel at the fastening point.

9. Fastening arrangement (20) according to claim 7 and/or 8, **characterized in that** the façade panel (26) consists of plastic, metal, fiber cement, insulation materials or of a composite of one or more such materials.

10. Fastening arrangement (20) according to claim 7-9, **characterized in that** the façade panel (26) has pilot holes whose diameter D_{P} is at least 50% larger than the nominal diameter D_{S} of the façade panel screw (10, 30).

11. Fastening arrangement (20) according to claim 7-10, **characterized in that** pilot holes are provided in the supporting component (26) or the substructure, concentric and aligned with the pilot holes in the façade panel, and **in that** their diameter is at most 2 mm larger than the nominal diameter D_{S} of the façade panel screw (10, 30).

12. Fastening arrangement (20) according to claim 7-11, **characterized in that** a damping, insulating, friction-reducing and/or adhesive intermediate layer (24) is applied between the supporting component (26) and the façade panel (22).

13. Fastening arrangement (20) according to claim 12, **characterized in that** the intermediate layer (24) is a foam tape, an adhesive tape, an insulating felt or a plastic layer.

## Revendications

1. Vis pour panneaux de façade (10) comprenant
- une tête (12) de diamètre D_{K}
- et une tige (14) essentiellement en forme de section cylindrique, allongée longitudinalement, d'un diamètre nominal Ds,
- la surface de la tige étant au moins partiellement pourvue d'un filetage (18) réalisé au moins à deux pas ;
- et d'une pointe conique (16) présentant un angle de pointe γ, le filetage (18) s'étendant de manière continue depuis la tige (14) jusqu'à la pointe (16),
- et ne présentant pas de pointe de perçage
dans laquelle
- l'angle de pointe γ est de 45° +/-5°,
- le diamètre de la tête D_{K} est au moins deux fois plus grand que le diamètre nominal Ds ; et la vis pour panneaux de façade en outre présente
- une section de tête inférieure non filetée (19, 39) sur la tige (14, 34) et
- un collet de butée (38) disposé sur la tige (34) entre le filetage et la section de tête inférieure non filetée (39).

2. Vis pour panneaux de façade (10) selon la revendication 1, **caractérisée en ce que** la vis pour panneaux de façade est fabriquée en une seule pièce.

3. Vis pour panneaux de façade (10) selon la revendication 1 et/ou 2, **caractérisée en ce que** la vis pour panneaux de façade est fabriquée en acier inoxydable.

4. Vis pour panneaux de façade (10) selon l'une quelconque des revendications 1 à 3, **caractérisée en ce que** la vis pour panneaux de façade présente un revêtement décoratif, fonctionnel ou inhibiteur de corrosion.

5. Vis pour panneaux de façade (10, 30) selon l'une quelconque des revendications 1 à 4, **caractérisée en ce que** la vis pour panneaux de façade présente un diamètre nominal de 4 à 7 mm, de préférence de 5 à 6 mm (dans les deux cas inclus).

6. Vis pour panneaux de façade (10,30) selon l'une quelconque des revendications 1 à 4, **caractérisée en ce que** la vis pour panneaux de façade présente un pas de 2 à 3 mm (dans chaque cas inclus).

7. Dispositif de fixation (20) comprenant un élément porteur (26) et un panneau de façade (22) ainsi qu'une vis pour panneaux de façade (10, 30) selon l'une quelconque des revendications 1 à 6.

8. Dispositif de fixation (20) selon la revendication 7, **caractérisé en ce que** l'élément porteur (26) fait partie d'une sous-construction et présente au point de fixation une épaisseur de matériau de 2 à 6,5 mm en aluminium ou de 0,9 à 2,5 mm en acier.

9. Dispositif de fixation (20) selon la revendication 7 et/ou 8, **caractérisé en ce que** le panneau de façade (26) est constitué de matière plastique, de métal, de fibrociment, de matériaux isolants ou d'un composite d'un ou plusieurs de ces matériaux.

10. Dispositif de fixation (20) selon l'une quelconque des revendications 7 à 9, **caractérisé en ce que** le panneau de façade (26) présente des avant-trous dont le diamètre D_{P} est au moins 50 % plus grand que le diamètre nominal D_{S} de la vis pour panneaux de façade (10, 30).

11. Dispositif de fixation (20) selon l'une quelconque des revendications 7 à 10, **caractérisé en ce que** des avant-trous sont prévus dans l'élément porteur (26) ou dans la sous-construction, concentriquement et en alignement avec les avant-trous dans le panneau de façade et **en ce que** leur diamètre est au maximum de 2 mm plus grand que le diamètre nominal Ds de la vis pour panneaux de façade (10, 30).

12. Dispositif de fixation (20) selon l'une quelconque des revendications 7 à 11, **caractérisé en ce qu'**une couche intermédiaire (24) amortissante, isolante, réduisant la friction et/ou adhésive est placée entre l'élément porteur (26) et le panneau de façade (22).

13. Dispositif de fixation (20) selon la revendication 12, **caractérisé en ce que** la couche intermédiaire (24) est une bande de mousse, une bande adhésive, un feutre isolant ou une couche de matière plastique.
